Europäisches Patentamt

European Patent Office

Office européen des brevets

(11) Publication number: 0 298 459 A2

# EUROPEAN PATENT APPLICATION

(21) Application number: 88110799.9

(22) Date of filing: 06.07.88

(51) Int. Cl.⁴: F16G 1/08 , F16G 1/16

(30) Priority: 10.07.87 JP 173407/87
10.07.87 JP 173408/87

(43) Date of publication of application:
11.01.89 Bulletin 89/02

(84) Designated Contracting States:
DE FR GB

(71) Applicant: AISIN SEIKI KABUSHIKI KAISHA
1, Asahi-Machi 2-Chome
Kariya City Aichi Pref. 448(JP)

(72) Inventor: Kobayashi, Toshimitsu
43 Kuchizengo Nawa-cho
Tokai City Aichi pref.(JP)
Inventor: Inagaki, Akio
14 Toriyama, Shimasaka-cho
Okazaki City Aichi pref.(JP)
Inventor: Kobayashi, Yasuhiro
1-182, Nanyo
Chiryu City Aichi pref.(JP)
Inventor: Mori, Masanori
2-337 Simonagare Ushida-cho
Chiryu City Aichi pref.(JP)
Inventor: Sakakibara, Takashi
2-1 Horisaki-cho
Handa City Aichi pref.(JP)

(74) Representative: Tiedtke, Harro, Dipl.-Ing. et al
Patentanwaltsbüro Tiedtke-Bühling-Kinne-
Grupe-Pellmann-Grams-Struif-Winter-Roth
Bavariaring 4
D-8000 München 2(DE)

(54) A belt.

(57) A belt comprises a main body and formed into an endless loop configuration, a plurality of equally pitched round shafts embeded in the main body, and a plurality of wires embeded in the main body and engaged with entire lengthwise portions of the plural shafts. By these means strength of the belt against the shearing force is increased.

Fig.1

## A belt

## BACKGROUND OF THE INVENTION

### Field of the Invention

The present invention relates to a belt and in particular to a belt for transmitting motion from one wheel or pulley to another.

### Description of the Prior Art

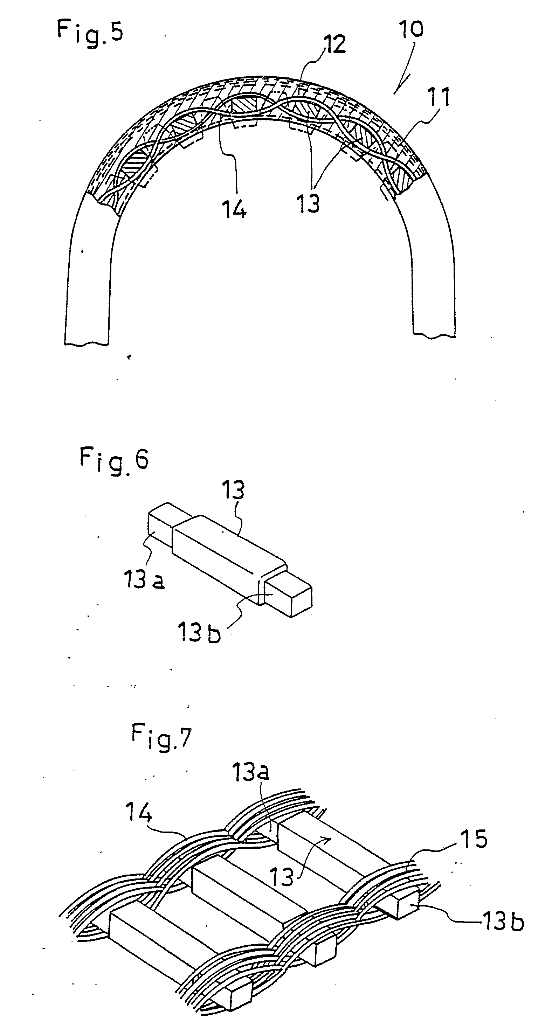

The conventional belt of the type is disclosed in Japanese Utility Model Publication No. 61-46275 which is issued on December 26, 1986. In detail, as shown in Figs.5 through 7, a belt 10 includes a main body 10 made of synthetic resin and formed into an endless configuration. In the main body 11, there is embedded a core 12 so as to increase the strength of the main body 11. The core 12 has a plurality of equally pitched rectangular shafts 13, a first plurality of wires 14 and a second plurality of wires 15. The shaft 13 is provided at one end and the other end thereof with a first reduced portion 13a and a second portion 13b, respectively. The first plurality of wires 14 and the second plirality of wires 15 are interlaced with the first reduced portion 13a and a second reduced portion 3b, respectively. The plural wires 14 and 15 increase the tensile strength of main body 11 and the plural shafts 13 prevent deformation of the main body 11.

However, the main body 11 and a portion of the shaft 13 with which wires 14 and/or 15 are subject to separate due to shearing force applied to therebetween.

## SUMMARY OF THE INVENTION

It is, therefore, a principal object of the present invention to provide a belt without the aforementioned drawback.

It is another object of the present invention to provide a belt in which a main body may not be separated from a plural shafts embeded therein.

According to the present invention, a belt comprises a main body and formed into an endless loop configuration, a plurality of equally pitched round shafts embedded in the main body, and a plurality of wires embedded in the main body and engaged with entire lenghthwise portions of the plural shafts. In the present invention, as a whole, strength of the belt against the shearing force is increased results in the delimination of the aforementioned drawback.

## BRIEF DESCRIPTION OF THE DRAWINGS

Fig.1 is a perspective view of a belt according to a first embodiment of the present invention;

Fig.2 is a perspective view showing a relationship between plural wires and plural shafts in the belt which is shown in Fig.1;

Fig.3 is a cross-sectional view of a belt according to a second embodiment of the present invention;

Fig.4 is a perspective view showing a relationship between plural wires and plural shafts in the belt which is shown in Fig.3;

Fig.5 is a cross-sectional view of a conventional belt;

Fig.6 is a perspective view showing a relationship between plural wires and plural shafts in the belt which is shown in Fig.5; and

Fig.7 is a perspective view of a single shaft in the belt in Fig.5.

## DETAILED DESCRIPTION OF THE PREFERRED EMBODIMENTS

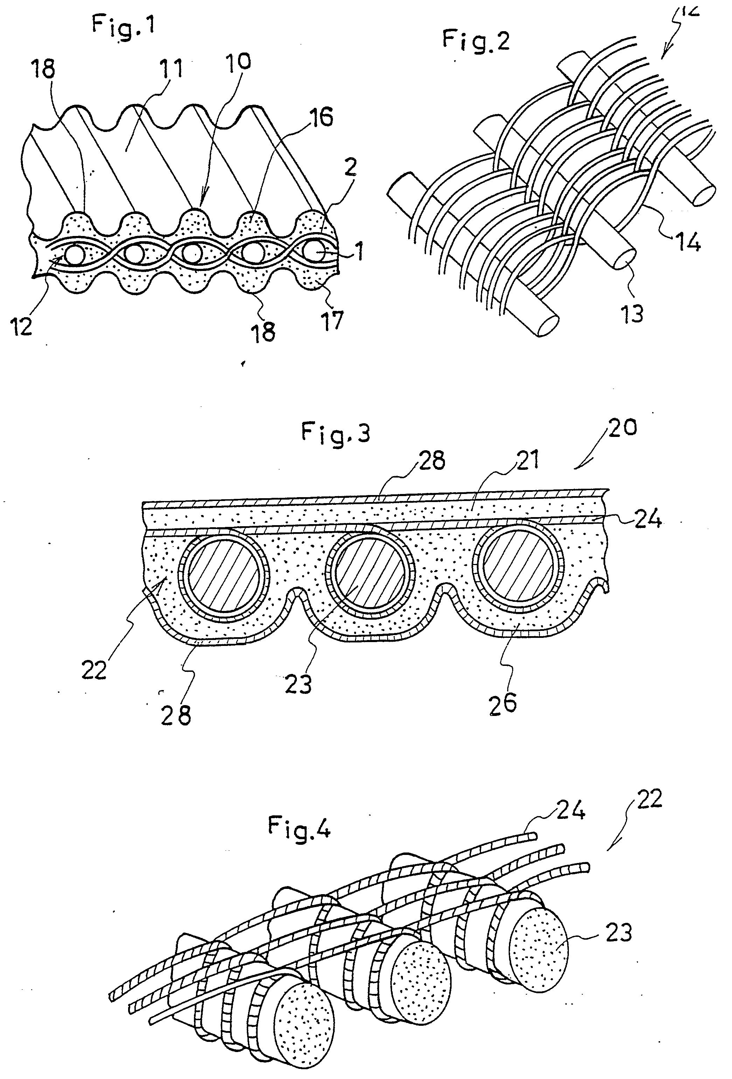

Referring now to Figs. 1 and 2, a belt 10 includes a main body 11 in which a core 12 is embedded. The main body 11 are provided at an outer surface and a lower surface thereof with a first plurality of cogs 16 and a second plurality of cogs 17, respectively. Each surface is covered with a sail-cloth or a canvas-cloth 18. The main body 11 is made of rubber and is of high rigidity having longitudinal elastic coefficient from 10 to 140 kg/mm². As such rubber, chloroprene-rubber is available. The main body 11 may be made of a refractory synthetic resin having longitudinal elastic coefficient from 15 to 150 kg/mm². As such synthetic resin, polyester-elastomer or silicone is available.

The core 12, embedded in the main body 11, includes a plurality of equally spaced or pitched round shafts 13 and a plurality of wires 14 which are interlaced with entire lengthwise direction of the shafts 13.

In Figs.3 and 4, there is shown another belt 20 having cogs 26 at only inner surface provided. In a core 22 embedded in a main body 21, a pluarlity of wires 24 are wounded on round shafts 23. Opposite surfaces of the belt 20 are covered with canvas-clothes 28.

The belt 10 and the belts 20 are tested so as to check the duaribity thereof under a condition wherein temparature is 80-120 Centigrade, a rotational number of pulley is 6000 rpm and torque is 10 kg-cm. Another test-condition and results of this test are shown in a table presented in the next page. Duaribity of the belt 10 (20) is represented by a required time-duration for the separation of the wires 14 (24) from the main body 11 (21).

| The tested belt | | Raw material of the shaft | Raw material of the wire | Raw material of the main body | Duribility of the belt | Evalution |
|---|---|---|---|---|---|---|
| Figs. 1 and 2 | Example 1 | alminum | polyester fiber | chloropreme rubber | 30 hours | Good |
| | Example 2 | alminum | aromatic polyamid fiber | chloropreme rubber | 70 hours | Good |
| | Example 3 | alminum | aromatic polyamid fiber | polyester elastomer | exceeds 100 hours | Good |
| | Example 4 | alminum | aromatic polyamid fiber | silicone | 50 hours | Good |
| | Example 5 | alminum | polyamid fiber | polyester elastomer | 30 hours | Good |
| | Example 6 | alminum | carbon fiber | polyester elastomer | 50 hours | Good |
| Figs. 3 and 4 | Example 7 | chloroprene rubber (high rigid) | aromatic polyamid fiber | chloroprene rubber | 70 hours | Good |
| | Example 8 | chloroprene rubber (high rigid) | aromatic polyamid fiber | chloroprene rubber | exceeds 100 hours | Good |
| | Example 9 | chloroprene rubber (high rigid) | aromatic polyamid fiber | chloroprene rubber | exceeds 100 hours | Good |
| conventional | | chloroprene rubber (high rigid) | aromatic polyamid fiber | chloroprene rubber | 10 hours | Bad |

3

## Claims

1. A belt comprising:
   a main body formed into an endless configuration;
   a plurality of equally pitched round shafts and embeded in said main body; and
   a plurality of wires engaged with entire lengthwise portions of said shafts.

2. A belt according to Claim 1 wherein said wires are interlaced with said shafts.

3. A belt according to Claim 1 wherein said wires are wound on said shafts.

4. A belt according to Claim 1 wherein each of said wires is a twisted thread.

5. A belt according to Claim 4 wherein said thread is an organic fiber.

6. A belt according to Claim 4 wherein said thread is an inorganic fiber.

7. A belt according to Claim 4 wherein said thread is a glass fiber.

8. A belt according to Claim 1 wherein said main body is made of a rubber of high rigidity having longitudinal elastic coefficient 10 - 140 kg/mm$^2$.

9. A belt according to Claim 1 wherein said main body is made of refractory synthetic resin having longitudinal coefficient 5 - 150 kg/mm$^2$.

4

EP 0 298 459 A2

Fig.1

Fig.2

Fig.3

Fig.4

Fig.5

Fig.6

Fig.7